# DEMANDE DE BREVET EUROPEEN

(11) **EP 4 534 977 A1**
(43) Date de publication de la demande: **09.04.2025**
(21) Numéro de dépôt: 24197729.7
(22) Date de dépôt: 30.08.2024
(51) Int. Cl.: G01N 21/03, B01L 3/00, G01N 21/64

(54) **SYSTÈME D'ANALYSE OPTIQUE D'UN ÉCHANTILLON**

(30) Priorité: 06.10.2023 FR 2310704
(71) Demandeur: Commissariat à l'Energie Atomique et aux Energies Alternatives, 75015 Paris (FR)
(72) Inventeur: BLANDIN, Pierre, 38054 GRENOBLE CEDEX 09 (FR); FOUILLET, Yves, 38054 GRENOBLE CEDEX 09 (FR); RACINE, Benoit, 38054 GRENOBLE CEDEX 09 (FR); MEKKAOUI, Samir, 38054 GRENOBLE CEDEX 09 (FR); MERMET, Xavier, 38054 GRENOBLE CEDEX 09 (FR)
(74) Mandataire: INNOV-GROUP

(57) **Abrégé**

L'invention concerne un procédé d'analyse optique d'un échantillon dans un dispositif d'actionnement de gouttes fonctionnant par électromouillage, ledit dispositif d'actionnement comportant :
- Une chambre (1) formée par deux substrats (100, 101) agencés en vis-à-vis suivant un axe principal,
- Une première source lumineuse (S1) apte à générer ledit premier faisceau lumineux (L1) à destination d'une couche photoconductrice (C30) du substrat inférieur (101),
- Le substrat supérieur (100) comportant une deuxième électrode,
- Un dispositif d'analyse optique de l'échantillon et comprenant une deuxième source lumineuse (S2) d'excitation positionnée au-dessus du substrat supérieur (100), apte à générer un deuxième faisceau lumineux (L2) à une longueur d'onde d'excitation, et une unité de détection de la lumière émise par ledit échantillon à travers ledit substrat supérieur (100) causée par son excitation.

## Description

### Domaine technique de l'invention

La présente invention se rapporte à un système d'analyse optique d'un échantillon, comportant notamment un dispositif d'actionnement de gouttes fonctionnant par électromouillage.

### Etat de la technique

Il est connu de vouloir analyser des cellules ou des molécules en les isolant dans des gouttes. Certaines gouttes constituent alors des micro-réacteurs et il est ainsi possible de balayer rapidement un ensemble de gouttes pour détecter et isoler celles dans lesquelles une réaction a lieu. Ainsi, on peut facilement isoler les cellules qui peuvent avoir un intérêt par exemple pour la bio-production de molécules thérapeutiques.

Il faut cependant pouvoir trier les gouttes d'intérêt parmi un ensemble de plusieurs gouttes.

Pour manipuler des gouttes et les déplacer, il est connu d'employer le principe d'électromouillage (EWOD en anglais pour "Electowetting-on-dielectric"). Il permet de déplacer des gouttes par activation d'électrodes entre deux substrats. Les forces utilisées sont des forces électrostatiques. La demande de brevet FR2841063A1 décrit notamment ce principe qui utilise un caténaire placé en regard de plusieurs électrodes juxtaposées. Les électrodes sont activées de manière individuelle pour déplacer la goutte le long du caténaire. La demande de brevet WO2006/070162A1 décrit également un dispositif de dispense de gouttes utilisant ce principe d'électromouillage pour déplacer les gouttes.

Une variante de réalisation d'un dispositif de tri fonctionnant par électromouillage consiste à créer une matrice d'électrodes virtuelles, selon le principe appelé "Opto-EWOD" et décrit dans la publication référencée P. Y. Chiou, H. Moon, H. Toshiyoshi, C. J. Kim, and M. C. Wu, "Light actuation of liquid by optoelectrowetting," Sensors Actuators, A Phys., vol. 104, no. 3, pp. 222-228, 2003*.*

Dans cette variante, l'un des deux substrats utilisés comporte un empilement de couches, dont une couche photoconductrice non structurée. Un rayonnement lumineux permet de rendre localement conductrice la couche photoconductrice, définissant temporellement et localement une électrode virtuelle. Le faisceau lumineux induit donc localement l'effet d'électromouillage à l'échelle d'une goutte sans avoir à fabriquer une matrice d'électrodes à la surface du substrat où repose les gouttes. On a ainsi une matrice d'électrodes virtuelles générées par la lumière. La source lumineuse utilisée doit permettre la formation d'images, ou tout du moins un éclairement localisé sur des durées courtes. Le type de technologie pouvant répondre à ces exigences peut être une source laser qui balaye la surface de l'électromouillage afin d'actionner les gouttes à la surface, une solution de type écran que ce soit de l'émissif (OLED, LED, ...), du transmissif (LCD) ou encore de la projection (vidéoprojecteur).

Ce principe est repris dans la demande de brevet WO2023/281274A1**.** Il est mis en oeuvre en accompagnement d'un dispositif d'analyse optique des gouttes. Autrement dit, l'électromouillage selon le principe "opto-EWOD" est employé pour fixer précisément une goutte entre deux substrats et une analyse optique (par exemple par fluorescence) est réalisée sur la goutte en employant une source lumineuse d'excitation et un détecteur. Cette demande de brevet s'intéresse plus particulièrement à la problématique liée aux perturbations causées par la source lumineuse d'excitation sur la source lumineuse utilisée pour l'électromouillage, et réciproquement. Autrement dit, il est possible que la source lumineuse d'excitation vienne également exciter la couche photoconductrice, pouvant occasionner des perturbations dans la fixation de la goutte entre les deux substrats.

De plus, la source lumineuse nécessaire à l'activation de l'opto-EWOD peut générer une lumière supplémentaire qui perturbe l'analyse optique de la goutte. Tout ceci fait qu'il peut s'avérer difficile d'analyser optiquement une goutte et de l'actionner par "opto-EWOD" simultanément.

Pour y remédier, il est proposé dans la demande de brevet WO2023/281274A1 d'activer la source lumineuse d'excitation utilisée pour l'analyse optique, uniquement lorsque le champ électrostatique est désactivé, c'est-à-dire lorsque le système d'électromouillage est inactif.

Cette solution antérieure ne permet cependant pas une analyse en continu des gouttes piégées dans le système. Elle nécessite également un réglage fin des périodes d'activation et de désactivation du champ électrostatique. Lors d'une période de désactivation du champ électrostatique, il est également possible que les gouttes se déplacent entre les deux substrats, pouvant occasionner des erreurs dans l'analyse optique.

Le but de l'invention est de proposer un système d'analyse optique d'un échantillon liquide, qui utilise le principe d'électromouillage de type "opto-EWOD" et qui soit capable de pallier les inconvénients de l'état de la technique.

### Exposé de l'invention

Ce but est atteint par un procédé d'analyse optique d'un échantillon dans un dispositif d'actionnement de gouttes fonctionnant par électromouillage, ledit dispositif d'actionnement comportant :
- Une chambre formée par deux substrats agencés en vis-à-vis suivant un axe principal, de manière à former un substrat dit inférieur et un substrat dit supérieur, les deux substrats étant espacés l'un de l'autre pour former un espace d'accueil dudit échantillon,
- Le substrat inférieur étant réalisé par un empilement de couches dans lequel une couche photoconductrice est excitable par un premier faisceau lumineux de contrôle de déplacement par électromouillage pour former une première électrode,
- Une première source lumineuse apte à générer ledit premier faisceau lumineux à destination de la couche photoconductrice du substrat inférieur,
- Le substrat supérieur comportant une deuxième électrode,
- Une source de tension connectée à la première électrode et à la deuxième électrode de manière à former un champ électrostatique à travers ledit espace d'accueil,
- Un dispositif d'analyse optique de l'échantillon comprenant une deuxième source lumineuse d'excitation positionnée au-dessus du substrat supérieur, apte à générer un deuxième faisceau lumineux à une longueur d'onde d'excitation, et une unité de détection de la lumière émise par ledit échantillon à travers ledit substrat supérieur causée par son excitation,
- Le procédé consistant à :
- Traiter optiquement le deuxième faisceau lumineux à l'aide d'un dispositif optique pour couper les longueurs d'onde susceptibles d'exciter la couche photoconductrice du substrat inférieur.

L'invention concerne également un système d'analyse optique d'un échantillon comportant un dispositif d'actionnement de gouttes fonctionnant par électromouillage et apte à mettre en oeuvre le procédé défini ci-dessus, ledit dispositif d'actionnement de gouttes comportant :
- Une chambre formée par deux substrats agencés en vis-à-vis suivant un axe principal, de manière à former un substrat dit inférieur et un substrat dit supérieur, les deux substrats étant espacés l'un de l'autre pour former un espace d'accueil dudit échantillon,
- Le substrat inférieur étant réalisé par un empilement de couches dans lequel une couche photoconductrice est excitable par un premier faisceau lumineux de contrôle de déplacement par électromouillage pour former une première électrode,
- Une première source lumineuse apte à générer ledit premier faisceau lumineux à destination de la couche photoconductrice du substrat inférieur,
- Le substrat supérieur comportant une deuxième électrode,
- Une source de tension connectée à la première électrode et à la deuxième électrode de manière à former un champ électrostatique à travers ledit espace d'accueil,
- Un dispositif d'analyse optique de l'échantillon comprenant une deuxième source lumineuse d'excitation positionnée au-dessus du substrat supérieur, apte à générer un deuxième faisceau lumineux à une longueur d'onde d'excitation, et une unité de détection de la lumière émise par ledit échantillon à travers ledit substrat supérieur causée par son excitation,
- Le système comportant un premier élément optique positionné entre l'espace d'accueil de l'échantillon et la couche photoconductrice du premier substrat,
- Ledit élément optique étant choisi pour couper ladite longueur d'onde d'excitation du deuxième faisceau lumineux afin que celui-ci ne vienne pas exciter la couche photoconductrice.

Selon une réalisation particulière, le premier élément optique est positionné entre une couche isolante du substrat inférieur et la couche photoconductrice.

Selon une autre réalisation particulière, le premier élément optique est positionné entre une couche isolante du substrat inférieur déposée sur la couche photoconductrice et l'espace d'accueil.

Selon une autre réalisation particulière, le premier élément optique est intégré dans une couche isolante du substrat inférieur déposée sur la couche photoconductrice.

Selon une autre réalisation particulière, le système comporte un deuxième élément optique positionné entre la première source lumineuse et l'espace d'accueil, ce deuxième élément optique étant choisi pour couper les longueurs d'ondes du premier faisceau lumineux susceptibles de venir se superposer aux longueurs d'ondes de la lumière émise par l'échantillon causée par son excitation.

Avantageusement, le premier élément optique et le deuxième élément optique sont réunis en un même dépôt réalisé sur la couche photoconductrice du substrat inférieur, ce dépôt jouant également le rôle d'une couche isolante électrique.

Selon une particularité, ledit dépôt est réalisé sous la forme d'un empilement de couches en alternance de TiO₂/Al₂O₃ ou de SiO₂/Al₂O.

L'invention concerne également un système d'analyse optique d'un échantillon comportant un dispositif d'actionnement de gouttes fonctionnant par électromouillage et apte à mettre en oeuvre le procédé défini ci-dessus, ledit dispositif d'actionnement de gouttes comportant :
- Une chambre formée par deux substrats agencés en vis-à-vis suivant un axe principal, de manière à former un substrat dit inférieur et un substrat dit supérieur, les deux substrats étant espacés l'un de l'autre pour former un espace d'accueil dudit échantillon,
- Le substrat inférieur étant réalisé par un empilement de couches dans lequel une couche photoconductrice est excitable par un premier faisceau lumineux de contrôle de déplacement par électromouillage pour former une première électrode,
- Une première source lumineuse apte à générer ledit premier faisceau lumineux à destination de la couche conductrice du substrat inférieur,
- Le substrat supérieur comportant une deuxième électrode,
- Une source de tension connectée à la première électrode et à la deuxième électrode de manière à former un champ électrostatique à travers ledit espace d'accueil,
- Un dispositif d'analyse optique de l'échantillon comprenant une deuxième source lumineuse d'excitation positionnée au-dessus du substrat supérieur, apte à générer un deuxième faisceau lumineux à une longueur d'onde d'excitation, et une unité de détection de la lumière émise par ledit échantillon à travers ledit substrat supérieur causée par son excitation,
- Le système comportant :
- Un premier polariseur positionné entre la deuxième source lumineuse et ledit espace d'accueil, ce premier polariseur disposant de lignes de polarisation orientées dans une première direction,
- Un deuxième polariseur optique positionné entre l'espace d'accueil de l'échantillon et la couche photoconductrice du premier substrat, ce deuxième polariseur disposant de lignes de polarisation orientées dans une deuxième direction orthogonale à la première direction.

Selon une réalisation particulière, le système comporte également un troisième polariseur optique positionné devant la première source lumineuse, disposant de lignes de polarisation orientées suivant ladite première direction.

De manière avantageuse, la première source lumineuse est un afficheur de type OLED.

### Brève description des figures

D'autres caractéristiques et avantages vont apparaître dans la description détaillée qui suit faite en regard des dessins annexés dans lesquels :
- La figure 1 montre un système d'analyse optique d'un échantillon liquide et illustre son principe de fonctionnement ;
- La figure 2A montre le système d'analyse optique de l'invention selon une première réalisation particulière et la figure 2B illustre le principe de filtrage optique utilisé ;
- La figure 3A montre le système d'analyse optique de l'invention selon une deuxième réalisation particulière et la figure 3B illustre le principe de filtrage optique utilisé ;
- La figure 4A montre le système d'analyse optique de l'invention selon une troisième réalisation particulière et la figure 4B illustre le principe de filtrage optique utilisé ;
- La figure 4C montre un exemple de réalisation d'un ensemble multicouches capable d'assurer une fonction d'isolation électrique et de filtrage optique ;
- La figure 5 montre le système d'analyse optique de l'invention selon une quatrième réalisation particulière ;

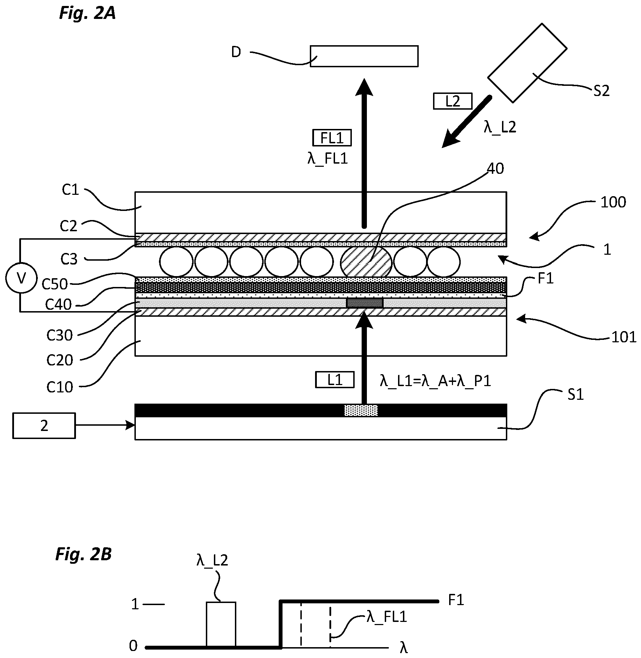

Sur les figures 2B, 3B et 4B, on a représenté une transmission optique normalisée en fonction de la longueur d'onde. Lorsque l'on est sur le palier haut (=1), toutes les longueurs d'ondes sont transmises et lorsque l'on est sur le palier bas (=0), aucune longueur d'onde n'est transmise.

### Description détaillée d'au moins un mode de réalisation

Dans la suite de la description, les termes "inférieur", "supérieur", "au-dessus", "au-dessous" sont à comprendre en prenant en compte un axe tracé verticalement dans le plan de la feuille. Bien entendu, ces termes ne doivent pas être considérés de manière limitative.

Selon l'invention, le système d'analyse optique comporte :
- Un dispositif d'actionnement de gouttes fonctionnant par électromouillage ;
- Un dispositif d'analyse optique ;

Le système est destiné à l'analyse d'un échantillon liquide.

L'échantillon liquide est avantageusement réalisé sous la forme d'une ou plusieurs gouttes 40 présentées successivement pour analyse. Le dispositif d'actionnement de gouttes est contrôlé pour déplacer chaque goutte 40 et la fixer pour une analyse optique au sein du système.

Par analyse optique, on entend par exemple une analyse par fluorescence ou équivalent, à partir d'une image de chaque goutte. Pour une analyse par fluorescence, on vient exciter des fluorophores présents dans une ou plusieurs gouttes 40 à l'aide d'une source d'excitation (deuxième source lumineuse S2) et on vient capturer une image d'une population de gouttes à l'aide d'une caméra pour déterminer la fluorescence émise par les fluorophores après excitation.

Il peut bien entendu s'agir d'un autre type d'analyse optique. L'invention s'applique dans le cas où cette analyse optique nécessite l'emploi d'une deuxième source lumineuse S2, en plus de la source lumineuse S1 employée pour le contrôle de déplacement des gouttes 40 par électromouillage.

Dans la suite de la description, nous considérerons de manière non limitative que l'analyse optique est une analyse par fluorescence.

### Dispositif d'actionnement de gouttes par électromouillage

### Figure 1

Ce dispositif comporte un composant disposant d'une chambre 1 définissant un espace d'accueil pour chaque goutte 40 à analyser.

L'espace d'accueil est défini par l'espacement présent entre deux substrats 100, 101 agencés en parallèle.

Un premier substrat, dit inférieur 101, est configuré pour former une première matrice d'électrodes (virtuelles - voir ci-après). Il est éventuellement surmonté d'une couche hydrophobe ou intègre cette couche hydrophobe C50.

Un deuxième substrat, dit supérieur 100, comporte une contre-électrode (couche C2).

Les deux faces de la chambre 1 en vis-à-vis sont avantageusement planes et parallèles entre elles. La face inférieure est désignée fond de la chambre 1 et joue le rôle de la matrice d'électrodes et la face supérieure intègre la contre-électrode.

Une source de tension (V) connectée à la première électrode et à la deuxième électrode permet de former les champs électrostatiques à travers le système et en particulier dans la couche isolante C40 et la couche photosensible C30.

Comme dans tout système microfluidique par électromouillage, le dispositif fonctionne par effet électrostatique et comporte des moyens de génération de plusieurs champs électrostatiques indépendants et juxtaposées entre les deux substrats 100, 101. Les champs électrostatiques sont générés perpendiculairement aux deux substrats.

Selon une particularité de l'invention, au niveau du substrat inférieur, le dispositif met en oeuvre une matrice d'électrodes virtuelles dite "Opto-EWOD" comme décrite dans la publication référencée P. Y. Chiou, H. Moon, H. Toshiyoshi, C. J. Kim, and M. C. Wu, "Light actuation of liquid by optoelectrowetting," Sensors Actuators, A Phys., vol. 104, no. 3, pp. 222-228, 2003*.*

Selon ce principe, le substrat inférieur 101 comporte un empilement de couches, dont une couche photoconductrice C30. Un rayonnement lumineux L1 permet de rendre localement conductrice la couche photoconductrice C30, définissant temporellement et localement une électrode virtuelle. Le faisceau lumineux induit donc localement l'effet d'électromouillage à l'échelle d'une goutte sans avoir à fabriquer une matrice d'électrodes de manière concrète. On a ainsi une matrice d'électrodes virtuelles. Lorsqu'une électrode virtuelle est créée sous la goutte 40 grâce à la projection optique d'un motif, un effet d'électromouillage apparait, ce qui modifie l'étalement de la goutte 40 par des forces électrostatiques, et permet de piéger (électrode virtuelle statique) ou déplacer (électrode virtuelle en mouvement) la goutte 40.

La première source lumineuse S1 peut être une source laser qui balaye la surface de l'électromouillage afin d'actionner les gouttes à la surface, ou formée d'une technologie de type écran, que ce soit de l'émissif (OLED, LED, ...), du transmissif (LCD) ou encore de la projection (vidéoprojecteur). Il est ainsi possible d'utiliser un afficheur de type OLED ou équivalent, placé à proximité sous le composant, capable de générer des faisceaux lumineux L1. Les couches du substrat inférieur 101 situées sous la couche photoconductrice C30 sont bien entendu transparentes aux rayonnements émis par cette première source lumineuse S1.

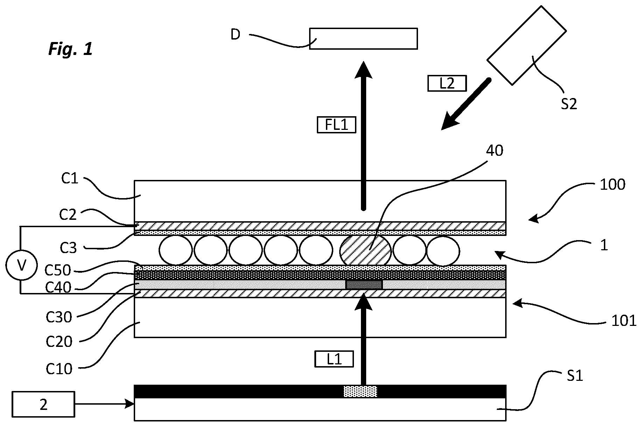

La figure 1 donne un exemple d'empilement de couches formant le composant, selon ce principe "Opto-EWOD".

Le substrat supérieur est composé d'une couche de verre C1, sur laquelle on dépose une fine couche d'ITO (pour Oxyde d'Indium Etain) C2, d'environ 100nm, ou un autre matériau conducteur transparent, formant alors la contre-électrode. On dépose ensuite une très fine couche C3 d'un matériau, par exemple choisi très hydrophobe (par exemple du PTFE pour Polytétrafluoroéthylène, à base de polysiloxane (tel que décrit dans la demande de brevet FR2887891A1) ou tout autre matériau hydrophobe connu par l'homme de l'art du domaine de l'électromouillage (Teflon - Marque déposée)). Le substrat 100 est retourné pour placer la couche C3 vers le bas.

Le substrat inférieur 101 comporte une couche de verre C10, sur laquelle on dépose une couche d'ITO C20 formant l'électrode. La couche photoconductrice C30 est ensuite déposée sur la couche C20 d'ITO. On dépose ensuite une couche isolante C40 sur la couche photoconductrice puis une couche C50 choisie hydrophobe (par exemple en PTFE). Les deux substrats 100, 101 sont mis en vis-à-vis et joint par l'extérieur pour former la chambre 1 destinée à accueillir les gouttes 40. La distance séparant les deux couches hydrophobes C3 et C50 dans le sens de la hauteur est choisie suffisante pour pouvoir ne placer qu'une seule goutte et non un empilement, permettant ainsi de pouvoir détecter les gouttes d'intérêt et d'associer chaque goutte à une seule électrode de la matrice ou à un groupe de plusieurs électrodes de la matrice.

La première source lumineuse S1 est par exemple composée d'un afficheur de type OLED pixelisé, employé pour générer chaque faisceau lumineux localisé à travers le substrat inférieur 101 et permettre l'activation d'électrodes virtuelles. La taille du faisceau lumineux L1 qui définit une électrode virtuelle doit être préférentiellement inférieure ou égale à la taille des gouttes.

Comme le principe de l'invention ne fonctionne pas nécessairement par déplacement des gouttes sur une surface (comme dans les documents de l'état de la technique) mais en fixant les gouttes d'intérêt, il n'est pas forcément nécessaire d'utiliser des couches externes C3, C50 hydrophobes. On peut en effet se contenter d'une couche en PTFE (Teflon-Marque déposée) ou d'un traitement chimique, par exemple avec un silane comme le FDTS (pour Perfluorodecyltrichlorosilane).

L'activation d'une électrode virtuelle est par exemple réalisée par une unité de commande et d'alimentation électrique 2. En activant un ou plusieurs pixels de l'afficheur, elle permet de générer une électrode virtuelle et de la placer à un potentiel électrique distinct du potentiel électrique de la contre-électrode (ce dernier potentiel électrique étant par exemple nul) et ainsi de créer une différence de potentiel entre l'électrode activée et la contre-électrode.

### Dispositif d'analyse optique

### Figure 1

Pour effectuer une analyse optique des gouttes 40 (par exemple par fluorescence), il faut ajouter une seconde source lumineuse S2 d'excitation placée classiquement au-dessus du composant et de la chambre 1 du dispositif d'actionnement, pour exciter l'échantillon (excitation des fluorophores dans le cas de la fluorescence).

Cette source lumineuse d'excitation S2 est associée à un détecteur D, également placé au-dessus de la chambre 1, celui-ci étant destiné à capter les signaux lumineux FL1 renvoyés par l'échantillon après excitation. Une telle configuration est standard, utilisée dans tous les microscopes dits en épifluorescence. Il peut notamment s'agir d'un ensemble d'imagerie par fluorescence. La source lumineuse d'excitation S2 émet un faisceau lumineux L2 destiné à exciter les fluorophores présents dans l'échantillon, et le détecteur D, par exemple une caméra, est chargé de capter la fluorescence FL1 émise par l'échantillon après excitation.

Le substrat supérieur 100 est choisi transparent aux rayonnements lumineux L2 émis par la source lumineuse d'excitation S2 et aux rayonnements de fluorescence FL1 émis par l'échantillon suite à excitation.

Selon l'invention, la cohabitation de la première source lumineuse S1 dédiée à l'électromouillage (Afficheur de type OLED par exemple) et de la deuxième source lumineuse S2, utilisée pour exciter l'échantillon dans le cadre de l'analyse optique, n'est pas évidente pour les deux raisons suivantes :
- La deuxième source lumineuse S2 employée lors de l'analyse optique des gouttes 40 ne doit pas déclencher le système d'actionnement par électromouillage et entraîner un déplacement ou un piégeage intempestif des gouttes 40 dans la chambre 1 ;
- Le détecteur D ne doit pouvoir détecter que la lumière émise par chaque goutte 40 excitée et ne pas être perturbée par les faisceaux lumineux émis par la première source lumineuse S1 située au-dessous et utilisée pour créer l'électrode virtuelle du dispositif d'actionnement par électromouillage ;
Ces deux problèmes techniques peuvent être résolus par des moyens distincts ou par une solution unique, capable de gérer les deux situations listées ci-dessus.

Dans la première situation :
- Il est nécessaire de traiter optiquement à l'aide d'un dispositif optique (filtrage optique ou polarisation optique - voir ci-après) de la lumière émise par la deuxième source lumineuse S2 afin que celle-ci ne vienne pas exciter la couche photoconductrice C30 du substrat inférieur 101 et causer des perturbations dans le contrôle de déplacement des gouttes 40 par électromouillage ;

Dans la deuxième situation :
- Il est possible d'utiliser une source lumineuse (S1) adaptée, émettant sur une plage de longueurs d'ondes distincte de celle qui doit être détectée (par exemple celle de la fluorescence) ;
- Il est possible de mettre en place un filtrage optique de la lumière émise par la première source lumineuse S1 afin de ne pas venir perturber l'analyse optique ; cette lumière émise ne doit pas venir se superposer à la lumière émise par l'échantillon après excitation ;

A minima, la solution de l'invention doit permettre de gérer la première situation, puisque la deuxième situation peut être gérée en adaptant simplement le type de source employé pour la première source lumineuse utilisée dans le dispositif d'actionnement.

Dans le cas où la première source lumineuse S1 n'est pas adaptée pour gérer la deuxième situation (cas par exemple de l'emploi d'un simple vidéoprojecteur, ou d'une source blanche avec un spectre d'émission très large), il est aussi nécessaire de filtrer la lumière émise par la première source lumineuse S1 pour que celle-ci n'émette pas dans les mêmes longueurs d'ondes que celles de la lumière émise par l'échantillon, après excitation.

### Filtrage optique - première situation

### Figure 2A

### Figure 2B

Dans le cas de la première situation, l'invention consiste à ajouter un filtre optique F1 entre la couche photoconductrice C30 et la chambre 1 accueillant l'échantillon.

Comme indiqué ci-dessus, ce filtre optique F1 a pour fonction de couper les longueurs d'ondes (notées λ_L2) du faisceau lumineux L2 émis par la deuxième source lumineuse S2 qui pourraient venir exciter la couche photoconductrice C30. Ainsi, seule la lumière émise aux longueurs d'ondes λ_L1 par la première source lumineuse S1 (celle de l'afficheur OLED) doit contribuer à l'excitation de la couche photoconductrice C30 et pouvoir occasionner le déplacement de la fluorescence d'une goutte 40 au sein du dispositif d'actionnement.

Comme indiqué ci-dessus, le substrat inférieur 101 est composé d'un empilement de couches, comprenant notamment la couche photoconductrice C30 surmontée d'une couche isolante (hydrophobe).

Le filtre optique peut ainsi prendre trois positions différentes :
- Une première position, entre la couche isolante C40 et la couche photoconductrice C30 (comme sur la figure 2A) ;
- Une deuxième position entre la couche isolante C40 et la chambre 1 occupée par l'échantillon ;
- Une troisième position, intégré à la couche isolante C40 ;

Comme illustré par la figure 2B, le filtre F1 est avantageusement un filtre passe-haut, coupant les longueurs d'ondes d'excitation λ_L2 de la fluorescence, émises par la deuxième source lumineuse S2, en amont de la couche photoconductrice C30. Il peut aussi s'agir d'un filtre coupe bande, laissant passer toutes les longueurs d'ondes, à l'exception de la longueur d'onde λ_L2 de la source pour l'excitation de la fluorescence.

On peut également noter que la lumière émise par l'échantillon par fluorescence est a priori trop faible pour venir exciter la couche photoconductrice C30 et entraîner une activation du mécanisme d'électromouillage. Si ce n'est pas le cas, le filtre doit également couper les longueurs d'ondes émise par l'échantillon par fluorescence.

### Filtrage optique -deuxième situation

### Figure 3A

### Figure 3B

Pour gérer la deuxième situation décrite ci-dessus, on peut ajouter un deuxième filtre optique F2.

Dans la deuxième situation, il faut en effet éviter que la première source lumineuse S1, utilisée pour le contrôle de déplacement des gouttes 40, n'émette aux longueurs d'ondes d'émission de l'échantillon, après excitation, afin de ne pas perturber l'analyse optique (par exemple par fluorescence) des gouttes 40 au niveau du détecteur D.

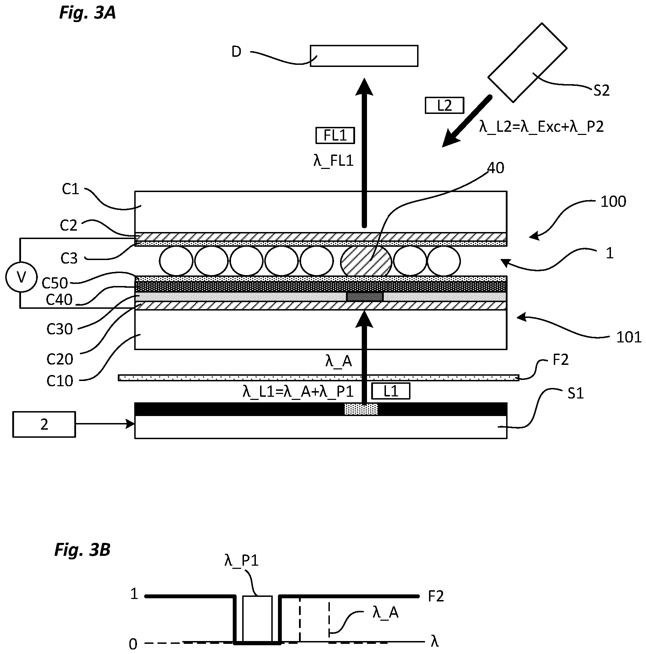

Pour cela, le deuxième filtre optique F2 est ajouté entre la première source lumineuse S1 et la chambre 1. Sur la figure 3A, ce deuxième filtre F2 est positionné entre la première source lumineuse S1 et le substrat inférieur 101.

De la manière la plus simple, en liaison avec la figure 3B, il s'agit d'utiliser un filtre coupe-bande qui permet de laisser passer toutes les longueurs d'ondes (λ_A permettant l'activation d'une électrode virtuelle) de la première source lumineuse S1, à l'exception des longueurs d'ondes (notées λ_P1) qui viendraient se superposer aux longueurs d'ondes (notées λ_FL1) de l'émission de fluorescence de l'échantillon et perturber l'analyse optique.

Classiquement, il faut noter que l'on utilise déjà un filtre de fluorescence devant le détecteur D, en vue de ne venir collecter que le rayonnement de fluorescence émis par l'échantillon.

### Filtrage optique - première situation et deuxième situation

### Figure 4A

### Figure 4B

### Figure 4C

Pour gérer les deux situations exposées ci-dessus, il est possible d'ajouter le premier filtre F1 et le deuxième filtre F2 selon les agencements proposés à la fois sur la figure 2A et sur la figure 3A et avec les caractéristiques définies ci-dessus.

Par ailleurs, on remarque que la gestion des deux situations peut être effectuée en positionnant un unique filtre entre la couche photoconductrice C30 et la chambre 1 destinée à être occupée par l'échantillon.

Il est ainsi possible de placer un unique filtre F3 ayant pour fonctions :
- La fonction de couper toutes les longueurs d'ondes λ_L2 en provenance de la deuxième source lumineuse S2, susceptibles de venir exciter la couche photoconductrice C30, et
- La fonction de couper les longueurs d'ondes λ_P1 en provenance de la première source lumineuse S1, susceptibles de venir se superposer aux longueurs d'ondes λ_FL1 de fluorescence émise par l'échantillon après excitation.

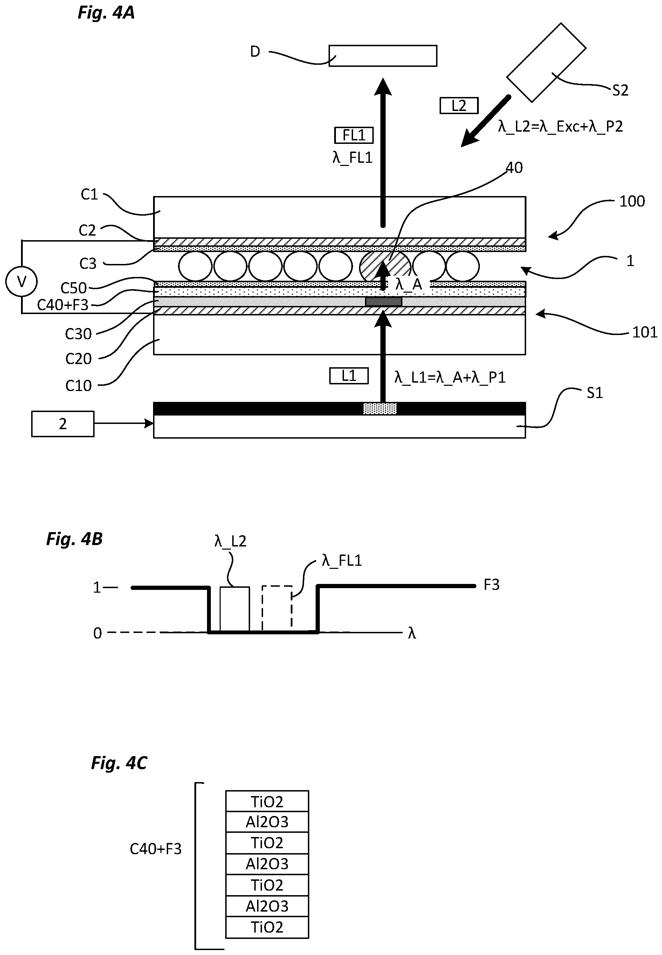

Il peut s'agir d'un filtre passe-haut dans les deux sens, avec une coupure au-dessus de la longueur d'onde de fluorescence λ_FL1 ou d'un filtre coupe-bande plus large (figure 4B).

Selon une réalisation avantageuse, un unique dépôt est réalisé sur la couche photoconductrice, celui-ci jouant à la fois le rôle de filtre F3 et celui de la couche d'isolation (C40).

A titre d'exemple, comme illustré par la figure 4C, ce dépôt peut être un empilement de couches en alternance de TiO₂/Al₂O₃ ou de SiO₂/Al₂O₃.

### Polarisation optique

Pour gérer la première situation exposée ci-dessus, il est également possible d'employer le principe de polarisation optique du faisceau lumineux L2 émis par la deuxième source lumineuse S2.

Un polariseur optique dispose typiquement de plusieurs lignes de polarisation orientées parallèlement. Il s'agit d'un composant qui ne va laisser passer que la composante du signal optique ayant une direction de polarisation parallèle à l'axe du polariseur.

Il s'agit alors d'ajouter un premier polariseur P1 venant polariser linéairement, suivant une première direction, le faisceau lumineux L2 généré par la deuxième source lumineuse S2 (pour l'excitation) et de venir placer entre la couche photoconductrice C30 et la chambre 1 un deuxième polariseur P2, suivant une direction orthogonale à la première direction, c'est-à-dire que l'axe de polarisation du second polariseur est orthogonal à l'axe du premier polariseur, et par conséquent la lumière qui est passée à travers le premier polariseur sera bloquée par le second polariseur. Ainsi dans cette configuration, la lumière provenant de la deuxième source lumineuse S2 n'atteint pas la couche photoconductrice C30 et n'est donc pas absorbée par celle-ci.

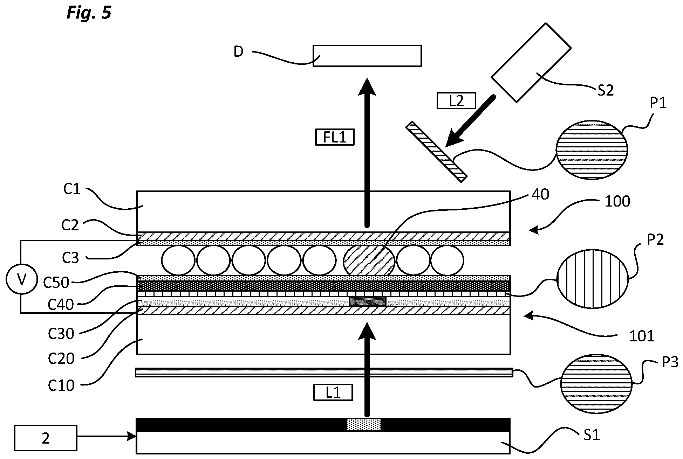

En liaison avec la figure 5, pour gérer les deux situations exposées ci-dessus, on ajoute aux polariseurs P1, P2 déjà présents, un troisième polariseur P3 devant la première source lumineuse S1, l'axe du polariseur P3 étant orienté suivant la première direction (la même que le premier polariseur P1). Dans cette configuration, la lumière provenant de la deuxième source lumineuse S2 n'atteint pas la couche photoconductrice C30 et n'est donc pas absorbée par celle-ci, et la lumière provenant de la première source lumineuse S1 pour l'actionnement n'atteint pas l'échantillon, et par conséquent n'est pas détectée sur la voie de détection de la fluorescence.

### Structuration de la couche

Dans une autre variante de réalisation, en vue de gérer les deux situations exposées ci-dessus, il serait également possible de prévoir une structuration de la surface de la couche isolante située au-dessus de la couche photoconductrice.

Cette structuration, ayant des propriétés de diffraction ou de réfraction maîtrisées, permettra de changer la direction des rayonnements. Ainsi la lumière émise par la deuxième source lumineuse S2 sera déviée et ne pourra pas atteindre la couche photoconductrice C30, et la lumière émise par la première source lumineuse S1 ne pourra pas atteindre le détecteur D.

Cette structuration pourrait par exemple créer des réseaux ou bien des métasurfaces.

L'invention présente ainsi de nombreux avantages, parmi lesquels :
- Elle permet de régler simplement les conflits entre les sources lumineuses d'un tel système d'analyse optique ;
- Les différentes solutions proposées sont faciles à mettre en place dans un système existant et ne nécessitent aucune programmation spécifique, comme dans l'état de la technique ;
- Les solutions proposées utilisent des moyens facilement disponibles et peu coûteux ;

## Revendications

1. Procédé d'analyse optique d'un échantillon dans un dispositif d'actionnement de gouttes fonctionnant par électromouillage, ledit dispositif d'actionnement comportant :
- Une chambre (1) formée par deux substrats (100, 101) agencés en vis-à-vis suivant un axe principal, de manière à former un substrat dit inférieur (101) et un substrat dit supérieur (100), les deux substrats étant espacés l'un de l'autre pour former un espace d'accueil dudit échantillon,
- Le substrat inférieur étant réalisé par un empilement de couches dans lequel une couche photoconductrice (C30) est excitable par un premier faisceau lumineux (L1) de contrôle de déplacement par électromouillage pour former une première électrode,
- Une première source lumineuse (S1) apte à générer ledit premier faisceau lumineux (L1) à destination de la couche photoconductrice (C30) du substrat inférieur (101),
- Le substrat supérieur (100) comportant une deuxième électrode,
- Une source de tension (V) connectée à la première électrode et à la deuxième électrode de manière à former un champ électrostatique à travers ledit espace d'accueil,
- Un dispositif d'analyse optique de l'échantillon comprenant une deuxième source lumineuse (S2) d'excitation positionnée au-dessus du substrat supérieur (100), apte à générer un deuxième faisceau lumineux (L2) à une longueur d'onde d'excitation, et une unité de détection de la lumière émise par ledit échantillon à travers ledit substrat supérieur (100) causée par son excitation,
- **Caractérisé en ce que** le procédé consiste à :
- Traiter optiquement le deuxième faisceau lumineux (L2) à l'aide d'un dispositif optique pour couper les longueurs d'onde (λ_L2) susceptibles d'exciter la couche photoconductrice (C30) du substrat inférieur.

2. Système d'analyse optique d'un échantillon comportant un dispositif d'actionnement de gouttes fonctionnant par électromouillage et apte à mettre en oeuvre le procédé défini en revendication 1, ledit dispositif d'actionnement de gouttes comportant :
- Une chambre (1) formée par deux substrats (100, 101) agencés en vis-à-vis suivant un axe principal, de manière à former un substrat dit inférieur (101) et un substrat dit supérieur (100), les deux substrats étant espacés l'un de l'autre pour former un espace d'accueil dudit échantillon,
- Le substrat inférieur (101) étant réalisé par un empilement de couches dans lequel une couche photoconductrice (C30) est excitable par un premier faisceau lumineux (L1) de contrôle de déplacement par électromouillage pour former une première électrode,
- Une première source lumineuse (S1) apte à générer ledit premier faisceau lumineux (L1) à destination de la couche photoconductrice (C30) du substrat inférieur,
- Le substrat supérieur (100) comportant une deuxième électrode,
- Une source de tension (V) connectée à la première électrode et à la deuxième électrode de manière à former un champ électrostatique à travers ledit espace d'accueil,
- Un dispositif d'analyse optique de l'échantillon comprenant une deuxième source lumineuse (S2) d'excitation positionnée au-dessus du substrat supérieur (100), apte à générer un deuxième faisceau lumineux (L2) à une longueur d'onde d'excitation (λ_L2), et une unité de détection de la lumière émise par ledit échantillon à travers ledit substrat supérieur (100) causée par son excitation,
- **Caractérisé en ce que** :
- Le système comporte un premier élément optique (F1) positionné entre l'espace d'accueil de l'échantillon et la couche photoconductrice (C30) du premier substrat,
- Ledit premier élément optique étant choisi pour couper ladite longueur d'onde d'excitation (À_L2) du deuxième faisceau lumineux (L2) afin que celui-ci ne vienne pas exciter la couche photoconductrice (C30).

3. Système selon la revendication 2, **caractérisé en ce que** le premier élément optique est positionné entre une couche isolante (C40) du substrat inférieur (101) et la couche photoconductrice (C30).

4. Système selon la revendication 2, **caractérisé en ce que** le premier élément optique est positionné entre une couche isolante (C40) du substrat inférieur (101) déposée sur la couche photoconductrice (C30) et l'espace d'accueil.

5. Système selon la revendication 2, **caractérisé en ce que** le premier élément optique est intégré dans une couche isolante (C40) du substrat inférieur (101) déposée sur la couche photoconductrice (C30).

6. Système selon la revendication 2, **caractérisé en ce qu'**il comporte un deuxième élément optique (F2) positionné entre la première source lumineuse (S1) et l'espace d'accueil, ce deuxième élément optique étant choisi pour couper les longueurs d'ondes (λ_P1) du premier faisceau lumineux (L1) susceptibles de venir se superposer aux longueurs d'ondes (λ_FL1) de la lumière émise par l'échantillon causée par son excitation.

7. Système selon la revendication 6, **caractérisé en ce que** le premier élément optique (F1) et le deuxième élément optique (F2) sont réunis en un même dépôt réalisé sur la couche photoconductrice (C30) du substrat inférieur (101), ce dépôt jouant également le rôle d'une couche isolante (C40) électrique.

8. Système selon la revendication 7, **caractérisé en ce que** ledit dépôt est réalisé sous la forme d'un empilement de couches en alternance de TiO₂/Al₂O₃ ou de SiO₂/Al₂O.

9. Système d'analyse optique d'un échantillon comportant un dispositif d'actionnement de gouttes fonctionnant par électromouillage et apte à mettre en oeuvre le procédé défini en revendication 1, ledit dispositif d'actionnement de gouttes comportant :
- Une chambre (1) formée par deux substrats (100, 101) agencés en vis-à-vis suivant un axe principal, de manière à former un substrat dit inférieur (101) et un substrat dit supérieur (100), les deux substrats étant espacés l'un de l'autre pour former un espace d'accueil dudit échantillon,
- Le substrat inférieur (101) étant réalisé par un empilement de couches dans lequel une couche photoconductrice (C30) est excitable par un premier faisceau lumineux (L1) de contrôle de déplacement par électromouillage pour former une première électrode,
- Une première source lumineuse (S1) apte à générer ledit premier faisceau lumineux (L1) à destination de la couche conductrice du substrat inférieur,
- Le substrat supérieur (100) comportant une deuxième électrode,
- Une source de tension (V) connectée à la première électrode et à la deuxième électrode de manière à former un champ électrostatique à travers ledit espace d'accueil,
- Un dispositif d'analyse optique de l'échantillon comprenant une deuxième source lumineuse (S2) d'excitation positionnée au-dessus du substrat supérieur, apte à générer un deuxième faisceau lumineux (L2) à une longueur d'onde d'excitation, et une unité de détection de la lumière émise par ledit échantillon à travers ledit substrat supérieur causée par son excitation,
- **Caractérisé en ce que** le système comporte :
- Un premier polariseur (P1) positionné entre la deuxième source lumineuse (S2) et ledit espace d'accueil, ce premier polariseur disposant de lignes de polarisation orientées dans une première direction,
- Un deuxième polariseur (P2) optique positionné entre l'espace d'accueil de l'échantillon et la couche photoconductrice (C30) du premier substrat, ce deuxième polariseur disposant de lignes de polarisation orientées dans une deuxième direction orthogonale à la première direction.

10. Système selon la revendication 9, **caractérisé en ce qu'**il comporte un troisième polariseur (P3) optique positionné devant la première source lumineuse (S1), disposant de lignes de polarisation orientées suivant ladite première direction.

11. Système selon l'une des revendications 2 à 10, **caractérisé en ce que** la première source lumineuse (S1) est un afficheur de type OLED.
